(19) Europäisches Patentamt / European Patent Office / Office européen des brevets

(11) **EP 1 713 580 B1**

(12) **FASCICULE DE BREVET EUROPEEN**

(45) Date de publication et mention de la délivrance du brevet:
**02.09.2015 Bulletin 2015/36**

(51) Int Cl.:
***B01J 29/80*** *(2006.01)*

(21) Numéro de dépôt: **05717416.1**

(22) Date de dépôt: **13.01.2005**

(86) Numéro de dépôt international:
**PCT/FR2005/000081**

(87) Numéro de publication internationale:
**WO 2005/082530 (09.09.2005 Gazette 2005/36)**

(54) **CATALYSEUR SOUS FORME DE GRAINS COMPORTANT UN COEUR POREUX ACIDE ENTOURE D UNE COUCHE EXTERNE UNIFORME**

KATALYSATOR IN FORM VON KÖRNERN MIT EINEM VON EINER EINHEITLICHEN AUSSENSCHICHT UMGEBENEN SAUREN PORÖSEN KERN

CATALYST IN THE FORM OF GRAINS COMPRISING AN ACIDIC POROUS CORE SURROUNDED BY A UNIFORM OUTER LAYER

(84) Etats contractants désignés:
**BE DE FR GB NL**

(30) Priorité: **29.01.2004 FR 0400841**

(43) Date de publication de la demande:
**25.10.2006 Bulletin 2006/43**

(73) Titulaire: **Institut Français du Pétrole
92852 Rueil Malmaison Cedex (FR)**

(72) Inventeurs:
- **BOUIZI, Younès**
  **F-68100 Mulhouse (FR)**
- **VALTCHEV, Valentin**
  **F-68200 Mulhouse (FR)**
- **ROULEAU, Loic**
  **F-69390 Charly (FR)**
- **BATS, Nicolas**
  **F-69320 Feyzin (FR)**
- **SIMON, Laurent**
  **F-69003 Lyon (FR)**

(56) Documents cités:
**US-A- 4 088 605      US-A- 4 861 739**

- **GOOSSENS A M ET AL: "ORIENTED FAU ZEOLITE FILMS ON MICROMETER-SIZED EMT CRYSTALS" ADVANCED MATERIALS, VCH VERLAGSGESELLSCHAFT, WEINHEIM, DE, vol. 11, no. 7, 7 mai 1999 (1999-05-07), pages 561-564, XP000849018 ISSN: 0935-9648**

- **ANN M. GOOSSENS, BART H. WOUTERS, PIET J. GROBET, VERONIQUE BUSCHMANN, LUCIEN FIERMANS, JOHAN A. MARTENS: "Synthesis and Characterization of Epitaxial FAU-on-EMT Zeolite Overgrowth Materials" EUROPEAN JOURNAL OF INORGANIC CHEMISTRY., vol. 2001, no. 5, mai 2001 (2001-05), pages 1167-1181, XP002293502 DEWILEY-VCH VERLAG, WEINHEIM.**

- **KLOETSTRA K R ET AL: "OVERGROWTH OF MESOPOROUS MCM-41 ON FAUJASITE" MICROPOROUS MATERIALS, ELSEVIER SCIENCE BV, AMSTERDAM, NL, vol. 6, no. 5/6, juillet 1996 (1996-07), pages 287-293, XP000911747 ISSN: 0927-6513**

- **WEBER R W ET AL: "Characterization and elimination of the external acidity of ZSM-5" MICROPOROUS MATERIALS AUG 1996 ELSEVIER SCIENCE B.V., AMSTERDAM, NETHERLANDS, vol. 7, no. 1, août 1996 (1996-08), pages 15-25, XP002293503**

- **J. STERTE, J. HEDLUND, D. CREASAR, O. ÖHRMAN, W. ZHENG, M. LASSINANTTI, Q. LI AND F. JAREMAN: "Application of the seed-film method for the preparation of structured molecular sieve catalysts" CATALYSIS TODAY, vol. 69, 2001, pages 323-329, XP002293504 NL AMSTERDAM**

## Description

Domaine technique :

La présente invention se rapporte au domaine des catalyseurs se présentant sous la forme de grains comportant chacun un coeur, à base de solide poreux acide, entouré d'au moins une couche externe uniforme, dans lequel le coeur et la couche externe sont des zéolithes.

Art antérieur :

La demande de brevet internationale WO 97/33684 décrit une méthode de préparation d'un film à base de zéolithe sur la surface de différents substrats.
La demande de brevet internationale WO 99/28031 décrit un catalyseur comprenant des cristaux d'une première zéolithe et une couche discontinue de cristaux d'une deuxième zéolithe.
Les documents Goossens A. M. et al.: "ORIENTED FAU ZEOLITE FILMS ON MICROMETER-SIZED EMT CRYSTALS" ADVANCED MATERIALS, VCH VERLAGSGESELLSCHAFT, WEINHEIM, vol. 11, no. 7, 7 mai 1999, pages 561-564 et A. M. Goossens et al.: "Synthesis and Characterization of Epitaxial FAU-on-EMT Zeolite Overgrowth Materials" EUROPEAN JOURNAL OF INORGANIC CHEMISTRY, no. 5, mai 2001, pages 1167-1181 divulguent un composé formé de deux phases cristallisées de type structural différent.
Les catalyseurs de l'art antérieur présentent un certain nombre d'inconvénients. En particulier, la non-uniformité de la couche externe ne permet pas d'obtenir une sélectivité diffusionnelle optimale.
Par non-uniformité de la couche externe, on entend une discontinuité ou variation de l'épaisseur de ladite couche autour du coeur. On entend par sélectivité diffusionnelle, le passage préférentiel de certains réactifs ou produits par rapport à d'autres. Elle est d'autant plus satisfaisante que le passage est plus rapide et que la séparation des espèces est plus efficace. La séparation est d'autant plus efficace que le recouvrement de la couche est total et le passage est d'autant plus rapide que l'épaisseur de la couche est fine et donc uniforme.
De surcroît, les procédés existants ne sont généralement pas adaptés pour recouvrir d'une couche uniforme un coeur à base de solides poreux dont la taille est inférieure ou égale à 0,4 millimètres. Les procédés de préparation de l'art antérieur sont mis en oeuvre sur des substrats poreux de taille relativement importante, de l'ordre du millimètre, de faible courbure, facilitant le recouvrement homogène par de fines couches de nano-cristaux.

Résumé de l'invention :

Il a été trouvé un catalyseur se présentant sous la forme de grains comportant chacun un coeur, à base de solide poreux acide, entouré d'au moins une couche externe uniforme, dans lequel le coeur et la couche externe sont des zéolithes ainsi qu'un procédé permettant la fabrication de grains dudit catalyseur, chaque grain étant formé d'un coeur de petite taille, c'est-à-dire de taille inférieure ou égale à 0,4 millimètre, et permettant de recouvrir ledit coeur d'au moins une couche externe présentant une épaisseur uniforme.
L'uniformité de l'épaisseur de la couche externe peut être évaluée à l'aide d'un critère, dit critère d'uniformité C, qui est défini comme étant égal à une moyenne, sur un nombre N d'échantillons de grains de catalyseur, du rapport de la différence entre l'épaisseur maximale, $Ei_{max}$, de la couche externe et l'épaisseur minimale, $Ei_{min}$, de cette même couche sur la moyenne de ces deux épaisseurs $Ei_{max}$ et $Ei_{min}$.
L'évaluation de ce critère d'uniformité peut se faire par tout moyen connu de l'homme du métier, tel que, par exemple, à partir d'une photographie ou d'une analyse d'images issue de caractérisation par microscopie électronique.
Le procédé de préparation du catalyseur selon l'invention comprend :

a) une étape de préparation de cristaux ou d'agglomérats de cristaux pour former le coeur de chacun des grains, le coeur étant constitué d'un solide poreux,
b) une étape de modification du coeur de chaque grain pour conférer au moins une acidité partielle audit coeur,
c) une étape d'adhésion de germes répartis uniformément sur la surface du coeur de chaque grain, lesdits germes étant constitués de nano-cristaux à base du matériau utilisé pour la couche externe, et
d) une étape de croissance desdits germes sur le coeur de chaque grain.

Description détaillée de l'invention :

Un objet de la présente invention porte sur un catalyseur se présentant sous la forme de grains, chaque grain étant formé d'un coeur solide poreux acide zéolithique présentant une taille comprise entre 0,1 micron et 0,4 millimètre recouvert d'au moins une couche externe zéolithique, la zéolithe du coeur différant de la zéolithe de la couche externe par le type structural, dans lequel la couche externe présente une épaisseur moyenne comprise entre 0,01 et 100 microns et uniforme définie avec un critère d'uniformité, C, qui est inférieur à 0,30, ledit critère d'uniformité C étant défini comme étant égal à une moyenne, sur un nombre N d'échantillons de grains de catalyseur, du rapport de la différence entre l'épaisseur maximale, $Ei_{max}$, de la couche externe et l'épaisseur minimale, $Ei_{min}$, de cette même couche sur la moyenne de ces deux épaisseurs $Ei_{max}$ et $Ei_{min}$.
La moyenne à la base du critère d'uniformité C est généralement réalisée à partir d'un nombre significatif d'échantillons de grains de catalyseur. Le nombre N d'échantillons de grains de catalyseur est, de préférence, supérieur ou égal à 100.

Le catalyseur selon l'invention présente une couche externe, dont le critère d'uniformité peut, par exemple, s'exprimer par l'expression suivante :

$$C = \frac{2}{N} * \sum_{i=1}^{N} \frac{Ei_{\max} - Ei_{\min}}{Ei_{\max} + Ei_{\min}}$$

dans laquelle :

$Ei_{\min}$ représente l'épaisseur minimale de la couche externe autour d'un grain i, et $Ei_{\max}$ représente l'épaisseur maximale de cette même couche externe et N correspond au nombre d'échantillons de grains utilisés pour réaliser cette caractérisation statistique de l'uniformité.

L'évaluation du critère d'uniformité peut se faire par tout moyen connu de l'homme du métier, tel que, par exemple, à partir d'une photographie ou d'une analyse d'images issue de caractérisation par microscopie électronique.

Dans le cas où le critère d'uniformité est mesuré par microscopie électronique à balayage, les grains de catalyseurs sont dispersés dans une résine synthétique de type Epon ou Araldite. Après polymérisation de la résine, les blocs contenant les grains de catalyseurs ont été démoulés et forment un cylindre d'environ 5mm de diamètre. Ils ont été coupés à l'aide d'un ultramicrotome (LKB 8800 ultrotome III) en utilisant tout d'abord un couteau de verre. La résine est taillée à son extrémité de manière a obtenir une petite surface (<0,5 mm$^2$) en forme de trapèze. Après détection d'une zone d'intérêt, des coupes ultrafines d'environ 80 nm ont été réalisées à l'aide d'un couteau de diamant. Les coupes ont ensuite été déposées sur un support pour l'observation au microscope électronique à balayage. Afin d'observer les coupes, il est nécessaire de métalliser les coupes à l'or par évaporation sous vide (atmosphère d'argon). L'équipement employé est un microscope PHILIPS XL-30, de grossissement 10 à 50000 fois.

En utilisant le critère C présenté dans le paragraphe précédent, le catalyseur selon l'invention présente une couche externe uniforme avec un critère d'uniformité inférieur à 0,3, de préférence inférieur à 0,2, de manière plus préférée inférieur à 0,1.

De préférence, au moins 95 %, de préférence au moins 97 %, de manière plus préférée au moins 99 %, voire 100%, de la surface du coeur des grains du catalyseur selon l'invention est recouvert par au moins une couche externe. Ce recouvrement confère à chaque grain une sélectivité diffusionnelle améliorée.

Selon l'invention, la composition chimique du coeur peut être la même ou différente de celle de la couche externe. De préférence, la composition chimique du coeur est différente de celle de la couche externe. La structure cristallographique du coeur est différente de la couche externe.

Chaque grain du catalyseur selon l'invention peut présenter plusieurs couches externes. Conformément à l'invention, au moins une de ces couches est uniforme avec une uniformité en accord avec le critère présenté précédemment. Cette couche enrobe avantageusement au moins 95 %, de préférence au moins 97 %, de manière plus préférée au moins 99%, voire 100 %, de la surface du coeur des grains ou de la couche inférieure sur laquelle elle est supportée.

De préférence, chaque grain du catalyseur selon l'invention comporte une seule couche externe uniforme et recouvrant au moins 95 % de la surface du coeur des grains.

Le coeur d'un grain de catalyseur selon l'invention peut être toute structure poreuse, ayant une taille de pores comprise entre 0,1 nm et 50 nm.

La taille du coeur des grains du catalyseur selon l'invention est comprise entre 0,1 micron et 0,4 mm. De préférence, la taille du coeur des grains du catalyseur selon l'invention est comprise entre 0,2 et 100 microns, de manière plus préférée comprise entre 0,5 et 20 microns.

Le coeur de chacun des grains du catalyseur selon l'invention peut être un solide microporeux cristallisé ou un solide mésoporeux structuré. Le coeur d'un grain peut comprendre un seul cristal ou une pluralité de cristaux de manière à former un agglomérat. Dans le cas d'un solide microporeux cristallisé, le diamètre des micropores dudit solide peut être compris entre 0,1 et 2 nm. Dans le cas d'un solide mésoporeux structuré, le diamètre des mésopores dudit solide peut être compris entre 2 et 50 nm.

Les solides microporeux cristallisés peuvent être choisis dans le groupe formé par les alumino-phosphates, les métallo-alumino-phosphates, les silicates, les métallo-silicates, en particulier les zéolithes décrites dans l'atlas des zéolithes (Atlas of zéolite framework types, Ch. Baerlocher, W.M. Meier, D.H. Olson, Elsevier, 5th revised edition, 2001) telles que les zéolithes appartenant au type structural FAU (zéolithe X, zéolithe Y), au type structural BEA (zéolithe Beta), au type structural MFI (zéolithe ZSM-5), au type structural EUO (zéolithe EU-1, zéolithe ZSM-50, zéolithe TPZ-3), au type structural NES (zéolithe NU-87), au type structural TON (zéolithe ZSM-22, zéolithe Theta-1, zéolithe NU-10), au type structural MTT (zéolithe ZSM-23), au type structural FER (zéolithe Ferrierite), au type structural MWW (zéolithe MCM-22), au type structural MEL (zéolithe ZSM-11), au type structural MFS (zéolithe ZSM-57), au type structural MOR (zéolithe Mordénite), au type structural MTW (zéolithe ZSM-12), au type structural OFF (zéolithe Offrétite), au type structural MAZ (zéolithe Mazzite), au type structural EMT (zéolithe EMC-2) ou les zéolithes NU-86, NU-88, IM-5, EU-2, ZBM-30, ZSM-48, IM-12.

Les solides mésoporeux structurés peuvent être, de préférence, choisis dans le groupe formé par les solides MCM-41, MCM-48 et SBA-15.

Selon la présente invention, le coeur d'un grain du catalyseur est acide. Le caractère acide du coeur peut être mesuré par tout moyen connu de l'homme du métier, tel que, par exemple, par adsorption de pyridine ou de lutidine mesurée par analyse infrarouge ou par analyse thermogravimétrique.

De préférence, la couche externe de chaque grain du catalyseur de l'invention est un solide microporeux cristallisé. De préférence, le solide microporeux cristallisé de la couche externe présente des pores ayant un diamètre compris entre 0,1 et 2 nm, de manière plus préférée entre 0,1 et 1,5 nm, de manière encore plus préférée entre 0,1 et 1 nm.

La couche externe peut être choisie dans le groupe formé par les alumino-phosphates, les métallo-alumino-phosphates, les silicates, les métallo-silicates, en particulier les zéolithes décrites dans l'atlas des zéolithes (Atlas of zéolite framework types, Ch. Baerlocher, W.M. Meier, D.H. Olson, Elsevier, 5th revised edition, 2001) telles que les zéolithes appartenant au type structural FAU (zéolithe X, zéolithe Y), au type structural BEA (zéolithe Beta), au type structural MFI (zéolithe ZSM-5, zéolithe Silicalite-1), au type structural EUO (zéolithe EU-1, zéolithe ZSM-50, zéolithe TPZ-3), au type structural NES (zéolithe NU-87), au type structural TON (zéolithe ZSM-22, zéolithe Theta-1, zéolithe NU-10), au type structural MTT (zéolithe ZSM-23), au type structural FER (zéolithe Ferrierite), au type structural MWW (zéolithe MCM-22), au type structural MEL (zéolithe ZSM-11, zéolithe Silicalite-2), au type structural MFS (zéolithe ZSM-57), au type structural MOR (zéolithe Mordénite), au type structural MTW (zéolithe ZSM-12), au type structural OFF (zéolithe Offrétite), au type structural MAZ (zéolithe Mazzite), au type structural EMT (zéolithe EMC-2), au type structural LTA (zéolithe A) ou les zéolithes NU-86, NU-88, IM-5, EU-2, ZBM-30, ZSM-48, IM-12.

Selon l'invention, le coeur et la couche externe sont des zéolithes. La zéolithe du coeur diffère de la zéolithe de la couche externe par le type structural.

Les associations de zéolithes pour former l'ensemble coeur-couche externe peuvent être choisies à partir de toutes les zéolithes décrites dans l'atlas des zéolithes (Atlas of zéolite framework types, Ch. Baerlocher, W.M. Meier, D.H. Olson, Elsevier, 5th revised edition, 2001).

L'épaisseur moyenne de la couche externe sur l'ensemble des grains du catalyseur peut être variable en fonction des catalyseurs et également, pour un catalyseur déterminé, en fonction des réactions envisagées et des conditions expérimentales, notamment de la température, de la pression et/ou de la vitesse de circulation du fluide. L'épaisseur moyenne de la couche externe sur l'ensemble des grains est définie par la formule :

$$C = \frac{2}{N} * \sum_{i=1}^{N} (Ei\max + Ei\min)$$

Selon l'invention, l'épaisseur moyenne de la couche externe sur l'ensemble des grains est comprise entre 0,01 et 100 microns, de manière plus préférée entre 0,1 et 10 microns.

Le coeur d'un grain et, du fait de l'uniformité de la couche externe, le grain lui-même peuvent présenter toute forme, de préférence une forme sphérique, cylindrique ou ellipsoïdale, de manière plus préférée une forme sphérique.

Un grain se présente généralement sous la même forme que le coeur du fait de l'uniformité de la couche externe dudit grain.

Avantageusement, le coeur d'un grain du catalyseur représente au moins 10 % et au maximum 99% du volume total dudit grain. Le rayon du coeur de ce grain peut représenter au moins 40%, de manière plus avantageuse au moins 60%, de manière encore plus avantageuse au moins 70% du rayon total dudit grain.

Le catalyseur selon l'invention peut contenir un ou plusieurs éléments, notamment des métaux ou leurs cations, ou des composés de ces éléments, notamment des oxydes de métaux. Le catalyseur selon l'invention peut comporter au moins un métal choisi dans le groupe formé par les éléments Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

Le catalyseur selon l'invention peut comporter un ou plusieurs composants d'hydrogénation/déshydrogénation, tels que les métaux Ni, Co, Pt, Pd, Re et Rh.

Le catalyseur selon l'invention est généralement sous forme cationique, par exemple sous forme hydrogène ou sous forme ammonium.

Le catalyseur selon l'invention peut comporter un liant permettant de maintenir les grains ensemble, éventuellement sous une forme particulière, par exemple sous forme de pastille, de produit d'extrusion, de bille ou de poudre. Le liant peut également présenter une fonction de diluant inerte, par exemple pour contrôler l'activité par unité de poids de catalyseur. Ainsi le liant peut comporter un ou plusieurs cations ou oxydes dérivés d'éléments choisis dans le groupe formé par Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

Un autre objet de la présente invention porte sur un procédé de préparation du catalyseur selon l'invention.

Ledit procédé comprend :

a) une étape de préparation de cristaux ou d'agglomérats de cristaux pour former le coeur de chacun des grains, le coeur étant constitué d'un solide poreux,

b) une étape de modification du coeur de chaque grain pour conférer au moins une acidité partielle audit coeur,

c) une étape d'adhésion de germes répartis uniformément sur la surface du coeur de chaque grain, lesdits germes étant constitués de nano-cristaux à base du matériau utilisé pour la couche externe, et
d) une étape de croissance desdits germes sur le coeur de chaque grain.

L'ordre de présentation des étapes du procédé de l'invention ne correspond pas obligatoirement à l'ordre de réalisation de ces étapes. A titre d'exemple, l'étape b) peut être réalisée directement sur le coeur d'un grain après l'étape a) de préparation dudit grain ou, alternativement, sur un composite comportant le coeur et sa couche externe, après l'étape d) du procédé.

Lors de l'étape a), le coeur de chacun des grains du catalyseur selon l'invention peut être préparé par tout moyen connu de l'homme du métier. Les cristaux et agglomérats de cristaux pour former le coeur de chacun des grains sont préparés lors d'une seule étape de synthèse correspondant à l'étape a).

Lors de l'étape b) de l'invention, on réalise une modification du coeur de chaque grain pour conférer au moins une acidité partielle audit coeur. Cette modification peut être réalisée par tout moyen connu de l'homme du métier.

Par exemple, dans le cas d'un coeur à base de zéolithe comportant des ions de métaux alcalins, l'étape b) de modification doit généralement permettre d'éliminer, au moins en partie, ces métaux alcalins.

La modification de l'étape b) confère au coeur au moins une acidité partielle. Cette acidité peut également être totale, c'est-à-dire que tous les sites d'échanges du coeur sont associés à un proton.

Cette étape b) de modification peut être réalisée au moyen d'au moins un échange d'ions avec un acide, notamment un acide minéral tel que l'acide chlorhydrique et/ou à l'aide d'un composé d'ammonium obtenu par échange d'ions avec une solution d'un sel d'ammonium tel que du chlorure d'ammonium. L'échange d'ions peut être effectué au moyen d'une mise en suspension épaisse, à une ou plusieurs reprises, dans une solution d'échange d'ions. La zéolithe du coeur est généralement calcinée avant l'échange d'ions afin d'éliminer toute substance organique absorbée dans la mesure où l'échange d'ions s'en trouve facilité. L'échange ionique peut être réalisé par tout moyen et dans toute condition opératoire connue de l'homme du métier.

Avant la mise en oeuvre de l'étape c) du procédé de l'invention, le coeur peut éventuellement subir divers traitements. Pour un coeur à base de zéolithe ou de matériau mésoporeux, des traitements de modification thermique et/ou chimique classique connus de l'homme du métier peuvent être envisagés, en particulier, des opérations d'échanges ioniques pour mettre les zéolithes sous la forme cationique recherchée.

Des traitements de surface peuvent éventuellement être opérés pour extraire les éléments néfastes à la mise en oeuvre des étapes c) et d) du procédé de l'invention, afin de favoriser la réactivité du coeur et/ou l'ancrage des nano-cristaux à partir desquels va croître la couche externe.

Lors de l'étape c) du procédé de l'invention, on adhère des germes répartis uniformément sur la surface du coeur de chaque grain, lesdits germes étant constitués de nano-cristaux à base du matériau utilisé pour la couche externe.

Les nano-cristaux peuvent présenter une taille comprise entre 40 et 500 nm, de préférence entre 50 et 400 nm, de manière plus préférée entre 60 et 200 nm.

Cette adhésion peut être réalisée par tout moyen connu de l'homme du métier. A titre d'exemple, cette adhésion peut être réalisée à l'aide d'agents de liaison chimique, ou agent de greffage.

Alternativement, cette adhésion peut être réalisée à l'aide d'agents d'inversion de charge de surface, tels que, par exemple, les polymères cationiques décrits par V. Valtchev et al ("Zeolites and Mesoporous Materials at the Dawn of the 21 st Century", Proceedings of the 13th International Zeolite Conference, Montpellier, France, 8-13 July 2001, Studies in Surface Science and Catalysis, vol 135, p298).

Cette adhésion peut être réalisée par exemple par mélange de la zéolithe de coeur avec les germes de la zéolithe de la couche, en milieu agité et aqueux, après l'adsorption d'un polymère sur l'une des deux zéolithes, qui inverse la charge de surface et assure une liaison électrostatique. L'adsorption peut être réalisée en milieu agité aqueux, avec l'une des deux zéolithes, par exemple avec un polymère cationique, à un pH supérieur à 7.

Les nano-cristaux constituant les germes sont généralement des zéolithes qui peuvent être synthétisées par une méthode de synthèse de zéolithes colloïdales, par exemple par une méthode dite de « solution claire» telle qu'elle est décrite dans l'article "small particles technology", J. E. Otterstedt, D. A. Brandreth, Plenum Press, 1998.

Lors de l'étape d) de l'invention, les germes adhérés sur le coeur de chaque grain subissent une croissance. La croissance de la couche externe, qui est généralement une zéolithe, peut être réalisée en une ou plusieurs opération(s), par exemple par immersion du coeur, sur lequel les germes ont été déposés, dans un milieu agité et aqueux, dans des conditions hydrothermales.

La formation de la couche externe par croissance de germes répartis uniformément sur la surface du coeur de chaque grain implique une discontinuité entre le coeur et la couche. Cette discontinuité se retrouve en tout point de la jonction coeur/couche externe pour chacun des grains du catalyseur. Cette discontinuité est matérielle c'est-à-dire que la structure globale du catalyseur selon l'invention n'est pas homogène dans la mesure où elle présente, pour chaque grain, un coeur et une couche externe identifiés. Cette discontinuité entre le coeur et la couche est observable par microscopie électronique (à balayage , à transmission?). La jonction entre le coeur et la couche permet de bien distinguer, pour chaque grain du catalyseur selon l'invention, la présence d'un coeur et celle d'une couche externe qui enrobe ledit coeur.

En plus des opérations de modification réalisées au cours de l'étape b) du procédé de l'invention, le procédé peut comporter des étapes supplémentaires pour introduire une phase active complémentaire dans chaque grain, et éventuellement dans le liant, formant le catalyseur. Ces étapes complémentaires peuvent être réalisées à n'importe quel stade dans le procédé de l'invention. Elles peuvent porter sur le coeur du grain, sur la couche externe de ce grain, sur l'ensemble du grain, à savoir le coeur et la couche externe ou sur le liant.

D'une manière générale, on peut remplacer le(s) cation(s) des cristaux de coeur et/ou de la couche externe du catalyseur par tout cation ou tout cation métallique, notamment ceux des groupes IA, IB, IIA, IIB, IIIA, IIIB, y compris les terres rares, et ceux du groupe VIII, y compris les métaux nobles, de la classification périodique des éléments. On peut également remplacer ce ou ces cation(s) par l'étain, le plomb et le bismuth. L'échange est généralement réalisé avec une solution contenant un sel du cation approprié, de la manière connue de l'homme du métier. L'échange peut être fait sélectivement sur le coeur avant dépôt de la couche externe ou à la fois sur le coeur et sur la couche externe.

Le procédé de l'invention peut comporter une étape de dépôt d'un ou plusieurs éléments, notamment des métaux ou leurs cations, ou des composés de ces éléments, notamment des oxydes de métaux. Le catalyseur selon l'invention peut comporter au moins un métal choisi dans le groupe formé par les éléments Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

Ce dépôt peut être réalisé au niveau du coeur et/ou au niveau de la couche externe entourant ledit coeur. L'étape de dépôt de ces élément(s) peut être réalisée par un échange d'ions ou par une imprégnation avec ledit élément, cation ou composé, ou avec un précurseur approprié dudit cation ou composé. Un tel échange d'ions ou une telle imprégnation peut être réalisé(e) sur la zéolithe du coeur ou sur la couche externe, par exemple sous sa forme brute de synthèse, calcinée ou non, sous forme hydrogène et/ou sous forme ammonium et/ou sous toute autre forme échangée (métallique ou non).

Dans la plupart des cas d'un échange d'ions, il est préférable de n'effectuer qu'un échange partiel du métal, les sites restants étant occupés par un autre cation, notamment les cations hydrogène ou ammonium. Dans certains cas, il peut être souhaitable d'introduire deux cations métalliques ou plus par échange d'ions.

Dans les cas où la zéolithe du coeur et/ou la couche enveloppant ledit coeur sont imprégnés avec un composé métallique, le composé métallique peut être ajouté avec une teneur inférieure à 20 % en poids, de préférence inférieure à 10 % en poids, de manière plus préférée inférieure à 5 % en poids, par rapport au poids de catalyseur final.

L'imprégnation et l'échange peuvent être réalisés par tout moyen connu par l'homme du métier.

Le procédé de l'invention peut inclure un traitement d'activation. Ces traitements comprennent la réduction, par exemple dans une atmosphère comportant de l'hydrogène, afin de produire un métal ou d'autres formes réduites. Ces traitements peuvent être réalisés à n'importe quel stade de la préparation du catalyseur. Ces traitements peuvent éventuellement être réalisés ultérieurement lors de la mise en oeuvre du catalyseur, à l'intérieur d'une zone réactionnelle.

Le procédé de l'invention peut inclure une étape de mise en forme à l'aide d'un liant permettant de maintenir les grains ensemble. Cette mise en forme peut comprendre le mélange des grains de catalyseur avec le liant suivi, par exemple, d'une extrusion, une granulation, un séchage par atomisation ou une coagulation en goutte dudit mélange. Le liant peut éventuellement être mélangé préalablement avec un composé actif et présenter la fonction d'un diluant inerte, pour contrôler l'activité par unité de poids de catalyseur.

Le liant peut être toute substance utilisée de manière classique comme support de catalyseur, telle que la silice, les différentes formes d'alumine, des argiles telles que les bentonites, les montmorillonites, la sépiolite, l'attapulgite, de la terre à foulon et des matières poreuses synthétiques telles que silice-alumine, silice-zircone, silice-thorine, silice-glucine ou silice-dioxyde de titane. Des combinaisons de ces liants peuvent être envisagées dans le cadre de la présente invention.

Toute méthode appropriée pour mélanger les grains avec un liant, connue de l'homme du métier, peut être mise en oeuvre, notamment les méthodes adaptées à la mise en forme du catalyseur sous une forme d'extrudés, de pastilles, de granulés, de billes ou de poudre.

Dans le cas où le catalyseur comporte un composé métallique, par exemple un composant d'hydrogénation/ déshydrogénation ou un autre métal ayant une activité catalytique, et un liant, le composé métallique peut être échangé ou imprégné dans les grains ou dans le mélange avec un liant et/ou dans la composition grainliant. Dans le cas où au moins une partie des composés métalliques est imprégné ou échangé dans le liant, cette partie ou la totalité de ces composés peuvent être un ou plusieurs cations ou oxydes dérivés d'éléments choisis dans le groupe formé par Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Re et Rh.

Après la formation de la couche externe des grains du catalyseur, des opérations de modification thermique et chimique peuvent être conduites, pour décomposer par exemple les agents structurants, ou les agents de liaison organique, ou le matériau support organique s'il en est utilisé un, et pour mettre les zéolithes sous leur forme cationique recherchée.

Le catalyseur peut être mis en forme par toute technique connue de l'homme du métier, en particulier par granulation, par extrusion, par séchage par atomisation ou par coagulation de gouttes avec un liant. La mise en forme est avantageusement suivie d'une étape de séchage et d'une étape de calcination. Ces solides mis en forme peuvent également subir des traitements thermiques et chimiques, avant utilisation dans les procédés catalytiques.

Exemple 1 : synthèse d'un catalyseur comprenant des grains constitués d'une couche de zéolithe Beta sur un coeur de zéolithe Y

Le coeur est une zéolithe Y (type structural FAU), qui a subi un traitement de modification lui conférant l'acidité désirée (zéolithe USY). Elle provient de la société Zeolyst (© CBV780), est définie par un rapport Si/Al de 45 et se présente sous une forme d'agglomérats de 4-6 $\mu$m et ayant des cristaux de 0,4-0,6 $\mu$m.

La couche externe est une zéolithe Beta. La formation de la couche comprend la préparation des germes, l'adhésion des germes sur le coeur de zéolithe USY, la croissance des germes.

La préparation des germes de zéolithe Beta ayant un rapport Si/Al d'environ 17 se fait de la manière suivante : 0,41g d'isopropoxyde d'aluminium (Aldrich) est hydrolysé dans 6,50g de solution de TEAOH à 20% (Fluka, hydroxyde de tétraéthylammonium en solution aqueuse, 20 % en masse), une deuxième solution contenant 6,10g de silice colloïdale fraîchement lyophilisée (Akzo Nobel, Bindzil 30/220) dissoute dans 20,00g de solution de TEAOH à 20% est préparée. Les deux solutions sont ensuite mélangées de manière à obtenir une solution claire. La composition finale de cette solution est :

$$9 \text{ TEAOH} : 0,25 \text{ Al}_2\text{O}_3 : 25 \text{ SiO}_2 : 295 \text{ H}_2\text{O}$$

Le mélange réactionnel est introduit dans un flacon en polypropylène hermétique et mis à l'étuve, la synthèse des germes se fait à 80°C durant 15 jours. Une fois la synthèse terminée, les germes sont lavés, dispersés et récupérés par des centrifugations successives jusqu'à un pH voisin de 7. Le pH de la suspension colloïdale des germes de zéolithe Beta est ensuite ajusté à 9,5 par ajout d'une solution d'ammoniaque 0,1%. Il en résulte une suspension colloïdale de nanocristaux constituant les germes de taille moyenne de 100 nm.

L'adhésion est assurée par inversion de charge des agglomérats de cristaux de zéolithe USY. Une solution de polymère cationique (chlorure de poly(diallyldimethylammonium, commercialisé par la société Aldrich) à 0,5% en masse dans l'eau est préparée. Le pH de cette solution est ramené à 9,5 par ajout d'une solution 0,1% d'ammoniaque.

La zéolithe USY et la solution de polymère cationique sont mises en contact pendant 1 heure dans un rapport massique (solution de polymère cationique)/(cristaux) de 133. Les cristaux sont récupérés par décantation. L'excès de polymère cationique est éliminé par une succession de lavage avec une solution d'ammoniaque à 0,1% en masse dans l'eau.

La zéolithe USY traitée par le polymère cationique est mise en contact pendant 1 heure avec la suspension colloïdale de germes de zéolithe Beta dans un rapport massique (suspension colloïdale)/(cristaux) de 33. Le solide constitué de germes de zéolithe Beta adhérés à la surface des agglomérats de cristaux de zéolithe USY est récupéré par décantation. L'excès de germes de zéolithe Beta est éliminé par une succession de lavage avec une solution d'ammoniaque à 0,1% en masse dans l'eau.

Pour éliminer le polymère cationique et former des liaisons stables entre le coeur de zéolithe USY et les germes de zéolithe Beta, le solide constitué de germes de zéolithe Beta adhérés à la surface du coeur de zéolithe USY sont soumis à un traitement thermique (sous air) comprenant :

- une montée en température de l'ambiante à 200°C en 10 minutes,
- un palier de 1 heure,
- une montée de 200°C à 550°C en 4 heures,
- et un palier à 550°C pendant 4 heures.
- Le retour à température ambiante se fait avec l'inertie du four.

La croissance des germes débute par une immersion du solide constitué de germes de zéolithe Beta adhérés à la surface des agglomérats de cristaux de zéolithe USY dans une quantité de solution de synthèse définie ci-dessus telle que sa masse est 100 fois supérieure à celle des cristaux puis maintenus à 100°C pendant 7 jours. Le composite solide constitué d'une couche de zéolithe Beta adhérée à la surface des agglomérats de cristaux de zéolithe USY est récupéré par décantation et lavé avec de l'eau distillée. Le composite est ensuite filtré et séché à 100°C pendant 12 heures et calciné dans les conditions du traitement thermique ci-dessus.

La couche formée présente une épaisseur moyenne de 500 nm et un critère d'uniformité de 0,1.

Le composite constitué d'une couche de zéolithe Beta adhérée à la surface des agglomérats de zéolithe USY est malaxé avec un gel d'alumine de type SB3 fourni par la société Sasol. La pâte malaxée est alors extrudée au travers d'une filière de diamètre 1,4 mm. Les extrudés ainsi obtenus sont calcinés à 500°C durant 2 heures sous air. La teneur pondérale du composite Beta/USY est de 50% poids.

**Exemple 2 : synthèse d'un catalyseur comprenant des grains constitués d'une couche de zéolithe Silicalite-1 sur un coeur de zéolithe Beta**

Le coeur est une zéolithe Beta (type structural BEA) préparée selon la méthode suivante. De l'aluminium métal est dissout dans une solution de TEAOH à 20% (hydroxyde de tétraéthylammonium en solution aqueuse, 20 % en masse) à température ambiante, puis centrifuger pour éliminer les impuretés restantes. Le TEOS (tétraéthoxysilane) est ensuite ajouté, le mélange est laissé sous agitation jusqu'à obtention d'un gel dense (évaporation de l'alcool et de l'eau à température ambiante pour obtenir les 6 moles d'eau nécessaires). L'ajout de HF provoque la formation d'un solide qu'il faut briser le plus finement possible avant de l'introduire dans la chemise de l'autoclave. La synthèse se fait à 140°C durant 9,5 jours, la composition finale du gel est :

$$0,55 \text{ TEAOH} : 0,02 \text{ Al}_2\text{O}_3 : 1 \text{ SiO}_2 : 0,6 \text{ HF} : 6 \text{ H}_2\text{O}$$

Le mélange réactionnel est introduit dans un autoclave chemisé de téflon et mis à l'étuve. L'eau présente joue le rôle de solvant et assure une pression autogène : la pression à l'intérieur de l'autoclave est égale à la pression de vapeur saturante de l'eau à la température de la synthèse. Une fois la synthèse terminée, les cristaux sont récupérés sur un filtre, lavés puis séchés.

La zéolithe Beta peut être définie par un rapport molaire Si/Al de 25 et une taille moyenne de 20 $\mu$m.

Les cristaux de zéolithe Beta sont soumis aux opérations de modification, c'est-à-dire à des traitements thermiques et des opérations d'échanges ioniques. Le premier traitement thermique sous air comprend :

- une montée en température de l'ambiante à 200°C en 10 minutes,
- un palier de 1 heure,
- une montée de 200°C à 550°C en 4 heures,
- et un palier à 550°C pendant 4 heures.
- Le retour à température ambiante se fait avec l'inertie du four.

Ces cristaux présentent une surface spécifique d'environ 600 m$^2$/g.

L'échange ionique est opéré par mise en suspension de la zéolithe Beta dans une solution de nitrate d'ammonium, de concentration 10 M, à environ 100°C, pendant 4h. Les cristaux sont récupérés par filtration, lavés à l'eau permutée puis séchés dans une étuve à 100°C pendant 16h, et sont soumis deux autres fois aux échanges ioniques, filtrations, lavages et séchages.

Un deuxième traitement thermique est alors assuré dans les même conditions que le premier.

La couche externe est la zéolithe Silicalite-1. La formation de la couche comprend la préparation des germes, leur adhésion sur le coeur de zéolithe Beta et la croissance des germes.

Une suspension aqueuse de germes constitués de nanocristaux ayant une taille de 100 nm de zéolithe de type structurale MFI purement silicique (Silicalite-1) est préparée. La masse de zéolithe en suspension est de 4%.

La préparation des nanocristaux de silicalite-1 se fait de la manière suivante : 40,00g de TEOS (Fluka, Tetraéthoxysilane) sont hydrolysés dans 70,28g de solution de TPAOH à 20% (Fluka, hydroxyde de tétrapropylammonium en solution aqueuse, 20 % en masse), 10,16g d'eau sont ajoutés et la solution est ensuite agitée de manière à obtenir une solution claire. La composition finale de la solution est :

$$9 \text{ TPAOH} : 25 \text{ SiO}_2 : 480 \text{ H}_2\text{O} : 100 \text{ EtOH}$$

Le mélange réactionnel est introduit dans un flacon en polypropylène hermétique et mis à l'étuve, la synthèse se fait à 80°C durant 4 jours. Une fois la synthèse terminée, les cristaux sont lavés, dispersés et récupérés par des centrifugations successives jusqu'à obtenir un pH voisin de 7. Le pH de la suspension colloïdale de nanocristaux de silicalite-1 est ensuite ajusté à 9,5 par ajout d'une solution d'ammoniaque 0,1%.

L'adhésion des germes de zéolithe Silicalite-1 est assurée par inversion de charge de la zéolithe de coeur Beta. Les cristaux de zéolithe Beta (type structural BEA) sont soumis au traitement décrit ci-dessous.

Une solution de polymère cationique (chlorure de poly(diallyldimethylammonium, commercialisé par la société Aldrich) à 0,5% en masse dans l'eau est préparée. Le pH de cette solution est ramené à 9,5 par ajout d'une solution 0,1% d'ammoniaque.

Les cristaux de zéolithe Beta et la solution de polymère cationique sont mis en contact pendant 1 heure dans un rapport massique (solution de polymère cationique)/(cristaux) de 133. Les cristaux sont récupérés par décantation. L'excès de polymère cationique est éliminé par une succession de lavage avec une solution d'ammoniaque à 0,1% en masse dans l'eau.

Les cristaux de zéolithe Beta traités par le polymère cationique sont mis en contact pendant 1 heure avec la solution colloïdale dans un rapport massique (solution colloïdale)/(cristaux) de 33. Les cristaux sont récupérés par décantation. L'excès de zéolithe de type structural MFI est éliminé par une succession de lavage des cristaux avec une solution d'ammoniaque à 0,1% en masse dans l'eau.

Pour éliminer le polymère cationique et former des liaisons stables entre le coeur de zéolithe Beta et les germes de silicalite-1, le solide composite est soumis au traitement thermique décrit ci-dessus.

La croissance des germes débute par une immersion du solide composite constitué de germes de zéolithe Silicalite-1 adhérés à la surface des cristaux de zéolithe Beta dans une solution claire de synthèse définie par la composition molaire 3TPAOH : 25SiO$_2$ : 1500H$_2$O : 100EtOH, telle que sa masse est 100 fois supérieure à celle des cristaux puis maintenus à 200°C pendant 45 minutes.

Cette solution est obtenue par mélange de 28,92 g de TEOS, 136,54 g d'eau distillée et 16,94 g de TPAOH à 20% en masse dans l'eau.

Le composite constitué d'une couche de zéolithe Silicalite-1 adhéré à la surface des cristaux de zéolithe Beta est récupéré par décantation et lavé avec de l'eau distillée. Le composite est ensuite filtré et séché à 100°C pendant 12 heures.

Les opérations d'adhésion et de croissance sont répétées une seconde fois, avec une durée de croissance de 60 min (au lieu de 45 min).

La couche de Silicalite-1 formée présente une épaisseur moyenne de 1100nm et un critère d'uniformité de 0,08.

Le composite constitué d'une couche de zéolithe Silicalite-1 adhéré à la surface des cristaux de zéolithe Beta est malaxé avec un gel d'alumine de type SB3 fourni par la société Sasol. La pâte malaxée est alors extrudée au travers d'une filière de diamètre 1,4 mm. Les extrudés ainsi obtenus sont calcinés à 500°C durant 2 heures sous air. La teneur pondérale du composite Silicalite-1/Beta est de 50% poids.

## Revendications

1. Catalyseur se présentant sous la forme de grains, chaque grain étant formé d'un coeur solide poreux acide zéolithique présentant une taille comprise entre 0,1 micron et 0,4 millimètre recouvert d'au moins une couche externe zéolithique, la zéolithe du coeur différant de la zéolithe de la couche externe par le type structural, **caractérisé en ce que** la couche externe présente une épaisseur moyenne comprise entre 0,01 et 100 microns et uniforme définie avec un critère d'uniformité, C, qui est inférieur à 0,30, ledit critère d'uniformité C étant défini comme étant égal à une moyenne, sur un nombre N d'échantillons de grains de catalyseur, du rapport de la différence entre l'épaisseur maximale, $Ei_{max}$, de la couche externe et l'épaisseur minimale, $Ei_{min}$, de cette même couche sur la moyenne de ces deux épaisseurs $Ei_{max}$ et $Ei_{min}$.

2. Catalyseur selon la revendication 1, dans lequel au moins 95 % de la surface du coeur des grains est recouvert par au moins une couche externe.

3. Catalyseur selon la revendication 1 ou 2, dans lequel la composition chimique du coeur est différente de celle de la couche externe.

4. Catalyseur selon l'une des revendications 1 à 3, dans lequel la taille du coeur des grains est comprise entre 0,2 et 100 microns.

5. Catalyseur selon l'une des revendications 1 à 4, dans lequel la zéolithe de la couche externe présente des pores ayant un diamètre compris entre 0,1 et 2 nm.

6. Catalyseur selon l'une des revendications 1 à 5, dans lequel l'épaisseur moyenne de la couche externe sur l'ensemble des grains est comprise entre 0,1 et 10 microns.

7. Procédé de préparation d'un catalyseur selon l'une des revendications 1 à 6 comprenant :

   a) une étape de préparation de cristaux ou d'agglomérats de cristaux pour former le coeur de chacun des grains, le coeur étant constitué d'un solide poreux,

   b) une étape de modification du coeur de chaque grain pour conférer au moins une acidité partielle audit coeur,

   c) une étape d'adhésion de germes répartis uniformément sur la surface du coeur de chaque grain, lesdits germes étant constitués de nanocristaux à base du matériau utilisé pour la couche externe, et

   d) une étape de croissance desdits germes sur le coeur de chaque grain.

## Patentansprüche

1. Katalysator in der Form von Körnern, wobei jedes Korn gebildet ist durch einen festen, porösen und sauren zeolithischen Kern mit einer Größe zwischen 0,1 micron und 0,4 mm, umhüllt von wenigstens einer externen zeolithischen Schicht, wobei sich der Zeolith des Kerns vom Zeolith der Schicht strukturell unterscheidet, **dadurch gekennzeichnet, dass** die externe Schicht eine gleichförmige und mittlere Dicke zwischen 0,01 und 100 micron aufweist, definiert mittels eines Gleichförmigkeitskriteriums C, das kleiner 0,30 ist, wobei das Gleichförmigkeitskriterium C definiert ist als gleich einem Mittelwert, über eine Zahl N einer Stichprobe der Katalysatorkörner, des Verhältnisses der Differenz zwischen einer maximalen Dicke $Ei_{max}$ der externen Schicht und einer minimalen Dicke $Ei_{min}$ derselben Schicht zu dem Mittelwert der beiden Dicken $Ei_{max}$ und $Ei_{min}$.

2. Katalysator gemäß Anspruch 1, bei dem wenigstens 95% der Kernoberfläche des Korns von wenigstens einer externen Schicht umhüllt ist.

3. Katalysator gemäß Anspruch 1 oder 2, bei dem die chemische Zusammensetzung des Kerns unterschiedlich ist zu der der externen Schicht.

4. Katalysator gemäß Anspruch 1 bis 3, bei dem die Größe des Kerns der Körner zwischen 0,2 und 100 micron beträgt.

5. Katalysator gemäß Anspruch 1 bis 4, bei dem der Zeolith der externen Schicht Poren mit einem Durchmesser zwischen 0,1 und 2 nm aufweist.

6. Katalysator gemäß Anspruch 1 bis 5, bei dem die mittlere Dicke der externen Schicht über das Ensemble der Körner zwischen 0,1 und 10 micron beträgt.

**7.** Verfahren zur Herstellung eines Katalysators gemäß einem der Ansprüche 1 bis 6, umfassend:

> a) eine Stufe der Herstellung von Kristallen oder Agglomeraten von Kristallen, um den Kern jedes Korns zu bilden, wobei der Kern durch einen porösen Feststoff gebildet ist,
> b) eine Stufe der Modifikation des Kerns jedes Korns um dem Kern wenigstens ein partielle Säurefunktion zu verleihen,
> c) eine Stufe der Adhesion von Keimen, gleichmäßig verteilt über die Oberfläche der Kerne jedes Korns, wobei die Keime gebildet sind durch nano-Kristalle auf Basis eines für die externe Schicht verwendeten Materials,
> d) eine Stufe des Wachstums der genannten Keime auf dem Kern jedes Korns.

**Claims**

**1.** Catalyst that comes in the form of grains, each grain being formed by an acidic porous solid zeolitic core having a size of between 0.1 micron and 0.4 millimeter covered by at least one zeolitic external layer, the core zeolite differing from the external layer zeolite by the structural type, **characterized in that** the external layer has an average thickness comprised in the range 0.01 to 100 microns and uniform thickness with a uniformity criterion, C, which is less than 0.30, whereby said uniformity criterion C is defined as being equal to an average, on a number N of catalyst grain samples, of the ratio of the difference between the maximum thickness, $Ei_{max}$, of the external layer and the minimum thickness, $Ei_{min}$, of this same layer to the average of these two thicknesses $Ei_{max}$ and $Ei_{min}$.

**2.** Catalyst according to claim 1, wherein at least 95% of the surface of the core of the grains is covered by at least one external layer.

**3.** Catalyst according to claim 1 or 2, wherein the chemical composition of the core is different from that of the external layer.

**4.** Catalyst according to one of claims 1 to 3, wherein the size of the core of the grains is between 0.2 and 100 microns.

**5.** Catalyst according to one of claims 1 to 4, wherein the zeolite of the external layer has pores that have a diameter of between 0.1 and 2 nm.

**6.** Catalyst according to one of claims 1 to 5, wherein the average thickness of the external layer over all of the grains is between 0.1 and 10 microns.

**7.** Process for preparation of a catalyst according to one of claims 1 to 6 comprising:

> a) A stage for preparation of crystals or crystal agglomerates to form the core of each of the grains, the core consisting of a porous solid,
> b) A stage for modification of the core of each grain to impart an at least partial acidity to said core,
> c) A stage for adhesion of nuclei distributed uniformly over the surface of the core of each grain, whereby said nuclei consist of nanocrystals based on the material used for the external layer, and
> d) A stage of growth of said nuclei on the core of each grain.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9733684 A

- WO 9928031 A

**Littérature non-brevet citée dans la description**

- ORIENTED FAU ZEOLITE FILMS ON MICROMETER-SIZED EMT CRYSTALS. **GOOSSENS A. M. et al.** ADVANCED MATERIALS. VCH VERLAGSGESELLSCHAFT, 07 Mai 1999, vol. 11, 561-564
- **A. M. GOOSSENS et al.** Synthesis and Characterization of Epitaxial FAU-on-EMT Zeolite Overgrowth Materials. *EUROPEAN JOURNAL OF INORGANIC CHEMISTRY,* Mai 2001, (5), 1167-1181

- **CH. BAERLOCHER ; W.M. MEIER ; D.H. OLSON.** Atlas of zéolite framework types. Elsevier, 2001
- **V. VALTCHEV et al.** Zeolites and Mesoporous Materials at the Dawn of the 21 st Century. *Proceedings of the 13th International Zeolite Conference,* 08 Juillet 2001, vol. 135, 298
- **J. E. OTTERSTEDT ; D. A. BRANDRETH.** small particles technology. Plenum Press, 1998